# EUROPÄISCHE PATENTSCHRIFT

(11) **EP 3 434 891 B1**
(45) Veröffentlichungstag und Bekanntmachung des Hinweises auf die Patenterteilung: **13.12.2023**
(21) Anmeldenummer: 18184732.8
(22) Anmeldetag: 20.07.2018
(51) Int. Cl.: F02N 19/00, F02D 41/00, F02N 11/08, F02N 11/04, F02N 15/08, F02D 9/02

(54) **START-STOPP-VERFAHREN FÜR EINEN VERBRENNUNGSMOTOR, VERBRENNUNGSMOTOR UND KRAFTFAHRZEUG**
START STOP METHOD FOR A COMBUSTION ENGINE, COMBUSTION ENGINE AND MOTOR VEHICLE
PROCÉDÉ DE MARCHE-ARRÊT POUR MOTEUR À COMBUSTION INTERNE, MOTEUR À COMBUSTION INTERNE ET VÉHICULE AUTOMOBILE

(30) Priorität: 27.07.2017 DE 102017212997
(43) Veröffentlichungstag der Anmeldung: 30.01.2019
(73) Patentinhaber: VOLKSWAGEN AKTIENGESELLSCHAFT, 38440 Wolfsburg (DE)
(72) Erfinder: Horn, Hauke, 31228 Peine (DE); Halfpaap, Josef, 39114 Magdeburg (DE); Biener, Martin, 38173 Veltheim/Ohe (DE); Warnecke, Dirk, 38518 Gifhorn (DE)

(56) Entgegenhaltungen:
- EP-A1- 3 141 727
- DE-A1-102007 009 857
- DE-A1-102013 016 699
- JP-A- 2004 143 939
- JP-A- 2013 256 873
- US-A1- 2006 201 468
- US-A1- 2010 114 462
- US-A1- 2012 271 537

## Beschreibung

Die vorliegende Erfindung betrifft ein Start-Stopp-Verfahren für einen Verbrennungsmotor eines Kraftfahrzeugs, einen Verbrennungsmotor und ein Kraftfahrzeug.

Start-Stopp-Funktionalitäten sind inzwischen bei Kraftfahrzeugen weit verbreitet. Während eines Start-Stopp-Zyklus wird der Motor ohne aktives Zutun des Fahrers abgestellt (beispielsweise bei einem Ampelstopp) und steht während eines Standbyzustands still. Der Standbyzustand wird durch Betätigen der Kupplung, Lösen der Fußbremse (bei einem Automatikfahrzeug) oder durch Betätigung des Gaspedals beendet und ein Startvorgang wird eingeleitet.

Für den Start-Stopp-Betrieb werden Startergeneratoren oder insbesondere auch Riemenstartergeneratoren (RSG) verwendet, die wie eine Lichtmaschine über einen Riementrieb mit dem eigentlichen Verbrennungsmotor gekoppelt sind. Neben der Starterfunktion können solche Riemenstartergeneratoren auch eine Booster-Funktion beim Anfahren und Beschleunigen übernehmen, sowie beim Bremsen im Generatorbetrieb einen Teil der vernichteten kinetischen Energie wieder in das Stromnetz einspeisen (Rekuperation).

Der Start-Stopp-Betrieb in Verbindung mit einem Riemenstartergenerator liefert auf der einen Seite einen wichtigen Beitrag zur Kraftstoffersparnis, belastet aber auf der anderen Seite die mechanischen Komponenten des Antriebsstrangs durch häufige Startvorgänge, bei denen der Triebstrang erhöht beansprucht wird. Insbesondere Schwingungsdämpfungsglieder wie das Zweimassenschwungrad, Decoupler oder Torsionsdämpfer dämpfen zwar die entstehenden Schwingungen im Triebstrang ab, werden aber dabei unter Umständen sehr stark beansprucht, denn bei jedem Motorstart wird die Resonanzdrehzahl des Antriebsstrangs durchlaufen, was zu hohen Lasten im Zweimassenschwungrad führen und dort Schäden verursachen kann.

Es gibt unterschiedliche Ansätze, um dieses Problem zu verringern und die Resonanzschwingungen zu reduzieren oder zu vermeiden.

Dabei kann entweder zusätzliche Energie in das System eingebracht werden (siehe beispielhaft DE 100 35 521 B4, DE 101 48 175 A1, DE 10 2012 214 361 A1). Bei anderen Lösungen sind die Schwungmassen des ZMS mechanisch koppelbar (zum Beispiel DE 100 05 101 A1, DE 33 45 541 C2, GB 2 148 455, DE 10 2012 203 601, DE 10 2009 016 640, DE 10 2005 058 531, DE 10 2011 084 142). Schließlich gibt es auch einen Ansatz, bei dem die Ausgangsleistung der Verbrennungskraftmaschine reduziert wird, sobald Resonanzen aufzutreten drohen (EP 2 071 163 A2). Weitere Start-Stopp-Verfahren sind aus JP 2004 143 939 A und DE 10 2007 009 857 A bekannt.

Bei all diesen Lösungen sind entweder zusätzlicher Energieaufwand und/oder aufwändige konstruktive Maßnahmen erforderlich oder aber es gibt unerwünschte Verzögerungen (durch Leistungsreduktion) während des Start-Stopp-Vorgangs.

Es gibt auch andere Ansätze, die durch innermotorische Maßnahmen versuchen, die durch die Kompressionseffekte während der Startphase (beim "Anwerfen" des Motors) entstehenden Schwingungen zu reduzieren.

Für den Start eines Verbrennungsmotors eines Kraftfahrzeugs sind verschiedene Ausführungen im Stand der Technik bekannt.

Aus der deutschen Offenlegungsschrift DE 10 2013 016 699 A1 ist ein Startverfahren bekannt, bei dem die zunächst geöffnete Drosseleinrichtung während der Startphase des Verbrennungsmotors teilweise oder ganz geschlossen wird. Dadurch wird die Luftzufuhr in den Zylinder reduziert, um den auftretenden Kompressionseffekt am oberen Totpunkt zu verringern. So kann eine geringere Drehungleichförmigkeit während des Startvorgangs erzielt werden.

Aus der europäischen Patentveröffentlichung EP 3 141 727 A1 ist ein Startverfahren bekannt, bei welchem die mechanischen Belastungen des Schwingungsdämpfungsglieds des Triebstrangs verringert werden. Dabei wird die Verbrennungsluftfüllung der Zylinder der Verbrennungskraftmaschine während des Startvorgangs reduziert. Durch Drosseln der Verbrennungsluftzufuhr wird die Verbrennungsluftfüllung reduziert. Dadurch entsteht ein Unterdruck in dem Luftansaugtakt der Verbrennungskraftmaschine während der Drehung der Verbrennungskraftmaschine, der dazu führt, dass sich die Luftfüllung in den Zylinder reduziert. Diese Maßnahmen haben zwar einen Glättungseffekt auf die beim Anlassen auftretenden Drehzahlschwankungen, trotzdem bleiben die Schwingungsbeanspruchungen relativ hoch. Aufgabe der vorliegenden Erfindung ist es, ein Start-Stopp-Verfahren für einen Verbrennungsmotor eines Kraftfahrzeugs und ein entsprechendes Kraftfahrzeug, das ein solches Startverfahren ausführt, bereitzustellen, welches die oben genannten Nachteile wenigstens teilweise überwindet.

Diese Aufgabe wird durch das erfindungsgemäße Start-Stopp-Verfahren für einen Verbrennungsmotor eines Kraftzeugs nach Anspruch 1 und ein Kraftfahrzeug nach Anspruch 8 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Nach einem ersten Aspekt der vorliegenden Erfindung umfasst das Start-Stopp-Verfahren für einen Verbrennungsmotor eines Kraftfahrzeugs die folgenden Schritte: Abstellen des Verbrennungsmotors; Schließen einer Drosseleinrichtung; Halten eines beim Abstellen erzeugten Unterdrucks in einem Saugrohrabschnitt zwischen der Drosseleinrichtung und einem Zylinder; Starten des Verbrennungsmotors; Betreiben des Verbrennungsmotors bei wenigstens teilweise geöffneter Drosseleinrichtung.

Nach einem zweiten Aspekt der Erfindung umfasst diese eine Steuerung zum Betreiben eines Verbrennungsmotors eines Kraftfahrzeugs in einem Start-Stopp-Zyklus, die dazu ausgebildet ist, das erfindungsgemäße Verfahren durchzuführen.

Weitere Aspekte betreffen einen Verbrennungsmotor mit einer Steuerung, der dazu eingerichtet ist, das erfindungsgemäße Verfahren durchzuführen, sowie ein Kraftfahrzeug mit einem solchen Verbrennungsmotor.

Die Erfindung zeichnet sich dadurch aus, dass das Verfahren das Abstellen des Verbrennungsmotors und das Schließen der Drosseleinrichtung (einer Drosselklappe) beim Abstellen des Verbrennungsmotors umfasst. Dabei kann das Schließen der Drosseleinrichtung (Drosselklappe) auch zum Abstellen des Motors genutzt werden, d. h. die Drosseleinrichtung wird bereits vor dem bzw. zum Abstellen des Verbrennungsmotors geschlossen. Es ist aber auch möglich, den Verbrennungsmotor durch Unterbrechen der Kraftstoffzufuhr (Unterbrechen eines Einspritzvorgangs) bzw. durch Unterbrechen der Zündung bei einem Ottomotor zu beenden. Nach dem Abstellen wird im Standbymodus ein beim Abstellen erzeugter Unterdruck gehalten, der in einem Saugrohrabschnitt zwischen der Drosseleinrichtung und einem Einlassventil (eines Zylinders) anliegt. Dies erfolgt durch das Geschlossenhalten der Drosseleinrichtung.

Der Unterdruck im Saugrohrabschnitt bezieht sich auf einen Umgebungsdruck. Dieser Unterdruck im Saugrohr wirkt als Energiespeicher, der genutzt werden kann, um den Motor leichter zu starten. Leichter bedeutet in diesem Zusammenhang eine Verringerung der Kompressionsschwingungen beim Anlassen des Motors. Durch das Geschlossenhalten der Drosseleinrichtung kann dieser Unterdruck - je nach Dichtigkeit des Systems - über einen bestimmten Zeitraum aufrechterhalten werden (zum Beispiel 5 s bis 10 s).

Bei hinreichender Dichtigkeit und/oder bei großem Saugrohrvolumen kann dieser Zeitraum auch auf eine unbestimmte Länge ausgedehnt werden. Beim anschließenden Starten des Verbrennungsmotors bleibt die Drosselklappe während dieser Startphase bis zu einer bestimmten Schwellendrehzahl (zum Beispiel 400 Umdrehungen pro Minute) geschlossen. Während dieser Zeit sind die Verdichtungs-/Kompressionsschwankungen durch den herrschenden Unterdruck im Saugrohr relativ gering. Dadurch werden auch die sonst beim Anlassen typischen Drehzahlschwingungen sehr stark minimiert und die Belastung der schwingungsdämpfenden Bauteile wird deutlich verringert. Damit wird auch die Gefahr von Resonanzschäden erheblich minimiert. Weiter kann der Startvorgang selbst verkürzt werden, da der kritische Drehzahlbereich schneller erreicht wird, bei dem der Motor selbständig arbeitet.

Anschließend wird dann der Verbrennungsmotor bei wenigstens teilweise geöffneter Drosseleinrichtung in der herkömmlichen Weise betrieben. Der Öffnungswinkel α der Drosseleinrichtung richtet sich dann nach einem Fahrerwunsch (Anforderung einer Drehzahl bzw. einer spezifischen Motorleistung).

Es gibt Ausführungen, bei denen das Schließen der Drosseleinrichtung zu Beginn des Abstellvorgangs erfolgt (Abstellklappe). Damit kann der Unterdruckaufbau verstärkt werden; insbesondere dann, wenn der Unterdruck im Saugrohr durch einen Nachlaufbetrieb des Verbrennungsmotors beim Abstellvorgang aufgebaut wird. Beim Nachlaufen der Zylinder bei geschlossener Drosseleinrichtung wird Restluft aus dem Absaugrohr durch die Zylinderbewegung in den Abgastrakt gefördert und dadurch ein Unterdruck aufgebaut.

Es gibt Verfahren, bei denen der Unterdruck in dem Saugrohr während des Motorstillstands in einem Standbyzustand mittels der geschlossenen Drosseleinrichtung, insbesondere einer Drosselklappe, aufrechterhalten wird. Bei so einer Ausführung wird ein zentrales Steuerelement genutzt, um den Unterdruck aufzubauen und zu halten.

Es gibt auch Ausführungen, bei denen optional ergänzend zur Drosselklappe ein zusätzliches ansteuerbares Absperrelement in das Saugrohr eingebaut ist, um die Frischluftzufuhr beim Abstellen des Verbrennungsmotors zu unterbinden und gegebenenfalls den Saugrohrabschnitt gegen eine weitere Luftzufuhr abzusperren. Bei so einer Ausführung ist unter Umständen eine bessere Abdichtung gegen die Umgebungsluft möglich und auf diese Weise kann der Unterdruck für einen längeren Zeitraum aufrechterhalten werden als dies mittels der Drosselklappe möglich wäre.

Dabei gibt es Verfahren, bei denen der Unterdruck bei einem Startvorgang im Anschluss an den Standbyzustand des Verbrennungsmotors mittels der geschlossenen Drosseleinrichtung (Drosselklappe und/oder zusätzliches Absperrelement) aufrechterhalten wird.

Es gibt Verfahren, bei denen der Unterdruck in einem Schleppbetrieb (rollendes Fahrzeug bei eingekuppeltem Motor) mittels der geschlossenen Drosseleinrichtung aufrechterhalten wird. Damit wird das Bremsmoment durch den eingekuppelten Verbrennungsmotor, der mitgeschleppt wird, verringert und es steht ein höheres Rekuperationspotenzial zur Verfügung, das in einem solchen Fahrzustand in das elektrische System eingespeist werden kann. Damit ist ein erhöhtes CO₂-Reduktionspotenzial realisierbar. Da der Motor auch eingekuppelt bleibt, bleibt dieser auf einer Drehzahl, bei der sofort auf eine Zugkraftanforderung hin der Verbrennungsmotor in Betrieb gesetzt werden kann, ohne dass eine Zugkraftunterbrechung stattfindet bzw. ohne dass eine solche Zugkraftunterbrechung durch einen elektrischen Boost oder einen Überbrückungsmodus auszugleichen wäre.

Es gibt Verfahren, bei denen die Drosseleinrichtung bei laufendem Verbrennungsmotor in einem Antriebszustand in Abhängigkeit von einem Fahrerwunsch wenigstens teilweise geöffnet ist. Dies umfasst das Teilöffnen einer Drosselklappe oder aber auch das vollständige Öffnen einer optionalen zusätzlichen Absperreinrichtung, um beim Betrieb des Motors die nötige Frischluftzufuhr zu gewährleisten.

Es gibt Verfahren, bei denen das Starten des Verbrennungsmotors bei geschlossener Drosseleinrichtung bei einem Unterdruck erfolgt, der unter einem Druckschwellenwert liegt, der zwischen 0,2 und 0,8 bar unter einem Umgebungsdruck liegt. Bei so einer Ausführung kann das Wiederstarten des Motors aus dem Standbymodus druckgesteuert erfolgen. Wenn der Unterdruck ansteigt, d. h. die Druckdifferenz zum Umgebungsdruck absinkt und der Druck im Saugrohr zunimmt, kann, beispielsweise automatisch gesteuert, bei Erreichen eines bestimmten Druckschwellenwerts der Motor wieder gestartet werden, um den Startvorgang schonend durchführen zu können, und zwar schonender, als wenn dies erst dann geschieht, wenn der Druckschwellenwert überschritten wird.

Die Erfindung betrifft weiter eine Steuerung zum Betreiben eines Verbrennungsmotors eines Kraftfahrzeugs in einem Start-Stopp-Zyklus, die dazu ausgebildet ist, das erfindungsgemäße Verfahren auszuführen. Dazu gehören die Ansteuerung der Drosseleinrichtung einer Starteinrichtung und gegebenenfalls auch die Überwachung des Druckzustands im Saugrohr bzw. einer Standbyzeit bis zum Wiederstarten des Motors. Weiter betrifft die Erfindung einen Verbrennungsmotor mit einer erfindungsgemäßen Steuerung, der dazu eingerichtet ist, das erfindungsgemäße Verfahren durchzuführen.

Die Erfindung umfasst ebenfalls ein Kraftfahrzeug mit einem Triebstrang mit einem Verbrennungsmotor und einem Starter zum Drehen des Verbrennungsmotors für eine vorgegebene Anzahl von Umdrehungen und mit einer erfindungsgemäßen Steuerung. Mit diesem Aufbau ist es möglich, das erfindungsgemäße Start-Stopp-Verfahren für ein Kraftfahrzeug zu nutzen.

Dabei gibt es Ausführungen, bei denen ein Sensor zur Ermittlung einer Stellung einer Drosselklappe des Verbrennungsmotors vorgesehen ist.

Alternativ oder optional gibt es auch Ausführungen, bei denen ein Sensor zur Erfassung der Stellung eines weiteren Absperrorgans vorgesehen ist.

Es gibt auch Ausführungen, bei denen ein Saugrohrdrucksensor vorgesehen ist, der den Saugrohrdruck zwischen der Drosseleinrichtung und einem Zylinder erfasst. Damit ist es möglich, das Start-Stopp-Verfahren gegebenenfalls saugrohrdruckgesteuert durchzuführen.

Es gibt Ausführungen, bei denen der Starter als Riemenstartergenerator ausgebildet ist. Riemenstartergeneratoren (RSG) sind vielseitig einsetzbare Aggregate, die sowohl motorisch als auch generatorisch zu betreiben sind. Sie ersetzen gleichzeitig einen herkömmlichen Starter und eine Lichtmaschine. Im motorischen Betrieb arbeiten sie als Starter und starten den Verbrennungsmotor. Sie können aber auch gleichzeitig eine Booster-Funktion übernehmen und als zusätzlicher elektrischer Antrieb Leistungsreserven zur Verfügung stellen. Im generatorischen Betrieb können sie beim Abbremsen des Fahrzeugs rekuperativ elektrische Energie in das elektrische Netz des Fahrzeugs einspeisen.

Es gibt Ausführungen, bei denen das Kraftfahrzeug einen Verbrennungsmotor umfasst, der als Dieselmotor ausgebildet ist. Dieselmotoren arbeiten mit besonders hohen Verdichtungen im Kolben, um im Betrieb die Selbstzündung des eingespritzten Kraftstoffs zu realisieren. Dadurch sind die Schwingungsprobleme bei hochverdichtenden Dieselmotoren besonders deutlich und können durch das erfindungsgemäße Start-Stopp-Verfahren besonders wirksam durch die Druckabsenkung im Saugrohrbereich verringert werden.

Ausführungsbeispiele der Erfindung werden nun beispielhaft und unter Bezugnahme auf die beigefügten Zeichnungen beschrieben. Darin zeigt:
- Fig. 1: einen schematischen Ablauf eines Ausführungsbeispiels des erfindungsgemäßen Start-Stopp-Verfahrens;
- Fig. 2: ein Diagramm, in dem die Größen Drehzahl, Motordrehmoment und Öffnungswinkel einer Drosseleinrichtung über die Zeit aufgetragen sind;
- Fig. 3: eine schematische Darstellung eines Kraftfahrzeugs mit einem Verbrennungsmotor, in dem das erfindungsgemäße Verfahren ausführbar ist;
- Fig. 4: den Drehmomentverlauf während eines Start-Stopp-Zyklus, der gemäß dem erfindungsgemäßen Verfahren ausgeführt wird und
- Fig. 5: ein Diagramm, in dem ein Drehmomentverlauf mit dem Verlauf von Druckgrößen und der Stellung einer Drosseleinrichtung überlagert dargestellt ist und in dem zum Vergleich der Drehmomentverlauf bei einem üblichen Start-Stopp-System aufgetragen ist.

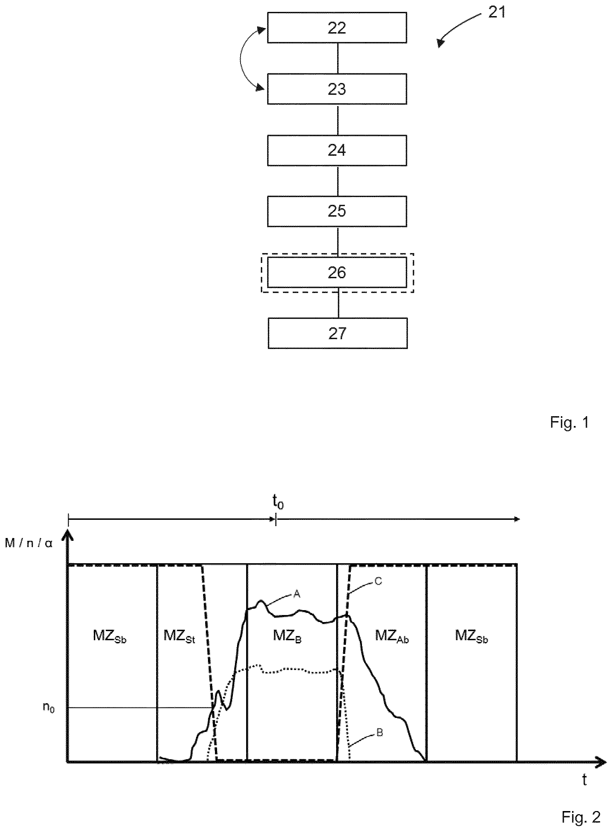

Ein Ausführungsbeispiel eines erfindungsgemäßen Start-Stopp-Verfahrens 21 ist in der Fig. 1 dargestellt. Schritt 22 betrifft das Abstellen des Verbrennungsmotors, Schritt 23 das Schließen der Drosseleinrichtung, Schritt 24 das Halten eines beim Abstellen anliegenden Unterdrucks in einem Saugrohrabschnitt zwischen der Drosseleinrichtung und einem Einlassventil bzw. einem Zylinder, Schritt 25 das Starten des Verbrennungsmotors und Schritt 27 das Betreiben des Verbrennungsmotors bei wenigstens teilweise geöffneter Drosseleinrichtung. Der Pfeil zwischen Schritt 22 und Schritt 23 deutet darauf hin, dass diese Verfahrensschritte auch ausgetauscht bzw. mehr oder weniger gleichzeitig ausgeführt werden können. Dies ist dann der Fall, wenn der Schritt 23 (Schließen einer Drosseleinrichtung) dazu führt, dass der Verbrennungsmotor im Schritt 22 abgestellt wird.

Optional kann ein Schritt 26 zwischen Schritt 25 und 27 vorgesehen werden, in dem der Unterdruck in dem Saugrohr aufrechterhalten wird.

Die Darstellung in Fig. 2 zeigt über die Zeit t aufgetragen einen Motordrehzahlverlauf A, einen Motormomentenverlauf B und einen Verlauf der Stellung der Drosseleinrichtung (C). Das Verfahren läuft dabei folgendermaßen ab.

Ausgehend von einem Zeitpunkt t₀, bei dem der Motor bei einer bestimmten Drehzahl ein bestimmtes Drehmoment liefert und die Drosseleinrichtung geöffnet ist (niedriges Niveau der Kurve C), befindet sich der Verbrennungsmotor in einem Antriebszustand MZ_{B}. Beim Übergang in einen Abstellvorgang MZ_{Ab} wird die Drosseleinrichtung in ihre Geschlossenstellung verstellt (oberes Niveau der Kurve C). Gleichzeitig kann beispielsweise ein Einspritzvorgang bzw. die Zündung abgestellt werden. Motormoment -(Kurve B) und Motordrehzahl (Kurve A) sinken während des Abstellvorgangs MZ_{Ab} auf null ab. Der Motor steht still und befindet sich in einem Standbyzustand MZ_{Sb}, in dem der Motor während des Stillstands verbleibt. Beim Schließen der Drosseleinrichtung und beim Abstellen des Verbrennungsmotors entsteht in einem Saugrohrbereich ein Unterdruck gegenüber der Umgebung, der durch die geschlossene Drosseleinrichtung gehalten wird.

Soll der Motor nun wieder gestartet werden, findet ein Übergang vom Standbyzustand MZ_{Sb} (siehe linke Seite des Diagramms) in einen Startvorgang MZ_{St} statt. Dabei wird zunächst die Drosseleinrichtung geschlossen gehalten und damit wird auch der Unterdruck im Saugrohr während des Startvorgangs gehalten. Eine Starteinrichtung (z. B. RSG) bringt den Motor auf eine ansteigende Drehzahl (ansteigender Verlauf der Kurve A) und ab einer bestimmten Grenzdrehzahl ist der Motor im Prinzip ohne weiteren Anschub oder Antrieb selbst lauffähig. Bei dieser Grenzdrehzahl (n beispielsweise gleich 400 min⁻¹) wird dann die Drosseleinrichtung geöffnet (Übergang vom oberen Niveau zum unteren Niveau). Damit setzt die Luftzufuhr (und damit die Verbrennung) ein und das Drehmoment (Kurve B) wird bei weiter ansteigender Drehzahl aufgebaut, und der Motor geht aus dem Startzustand MZ_{St} in den Antriebszustand MZ_{B} über.

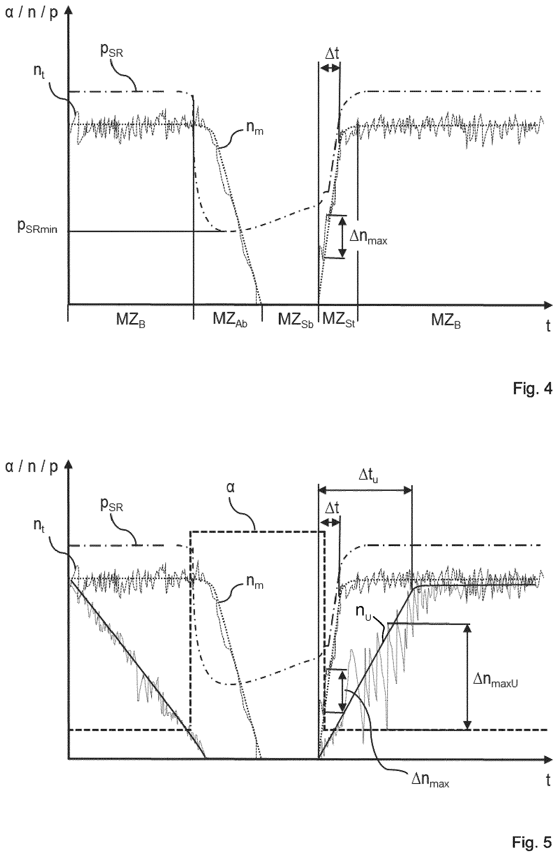

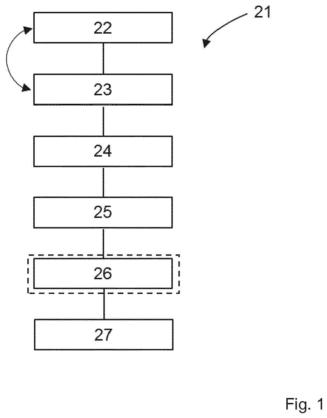

Durch das Halten des Unterdrucks während des Startvorgangs MZ_{St}, der beim Abstellvorgang MZ_{Ab} erzeugt wurde und während des Standbyzustands MZ_{Sb} gehalten wurde, ist der Startvorgang weich und mit verringerten Drehzahlschwankungen verbunden (siehe dazu weiter unten in den Erläuterungen zu Fig. 4 und 5).

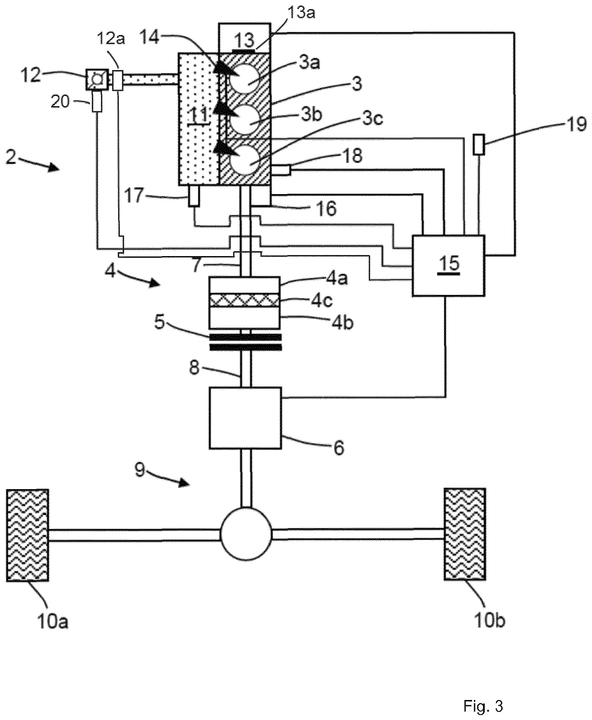

Fig. 3 zeigt ein erfindungsgemäßes Kraftfahrzeug 1.

Das Kraftfahrzeug 1 hat einen Triebstrang 2, in dem eine Verbrennungskraftmaschine 3, ein Zweimassenschwungrad 4, eine Kupplung 5 und ein Getriebe 6 miteinander gekoppelt sind.

Die Verbrennungskraftmaschine 3 ist hier als Hubkolbenmotor mit drei Zylindern 3a, 3b und 3c ausgestaltet und verfügt über eine Kraftstoffeinspritzung 14, die mit der Steuerung 15 über eine Verbindungsleitung verbunden ist. An der Verbrennungskraftmaschine ist ein Saugrohr 11 angeordnet, durch welches den Zylindern 3a-c Verbrennungsluft zugeführt wird. Auf der Eingangsseite des Saugrohrs 11 ist eine Drosselklappe 12 vorgesehen, die ebenfalls mit der Steuerung 15 verbunden ist und entsprechend von der Steuerung 15 gesteuert werden kann. Außerdem ist ein Starter 13 (z.B. Riemenstartergenerator-RSG) zum Starten bzw. Drehen der Verbrennungskraftmaschine 3 vorgesehen, der ebenfalls mit der Steuerung 15 verbunden ist. Der Riemenstartergenerator (RSG) 13 überträgt das Moment mit dem Riemen über einen Decoupler 13a auf die Kurbelwelle 7 und kann so die Funktion des Starters übernehmen.

Das Zweimassenschwungrad 4 hat ein Primärschwungrad 4a, das die primäre Masse bildet und zur Verbrennungskraftmaschine 3 hin angeordnet ist und ein Sekundärschwungrad 4b, das die sekundäre Masse bildet und zur Kupplung 5 und dem Getriebe 6 hin angeordnet ist. Das Primärschwungrad 4a und das Sekundärschwungrad 4b sind über ein Federelement 4c mechanisch miteinander gekoppelt, sodass Schwingungen, die im Triebstrang 2 auftreten, von dem Zweimassenschwungrad 4 aufgenommen werden.

Das Primärschwungrad 4a ist mit einer Kurbelwelle 7 der Verbrennungskraftmaschine 3 gekoppelt und das Sekundärschwungrad 4b ist über eine Welle mit der Kupplung 5 gekoppelt. Die Kupplung 5 ist wiederum über eine Getriebeeingangswelle 8 mit dem Getriebe 6 gekoppelt. Das Getriebe 6 ist an seiner Ausgangsseite über eine Antriebswelle 9 mit zwei Antriebsrädern 10a und 10b gekoppelt. Das Zweimassenschwungrad 4 ist zwischen der Verbrennungskraftmaschine 3 und dem restlichen Triebstrang 2 angeordnet, der aus Kupplung 5, Getriebe 6 und Antriebsrädern 10a und 10b mit den zugehörigen Wellen, nämlich der Getriebeeingangswelle 8 und der Antriebswelle 9 und weiteren nicht erklärten bzw. dargestellten Teilen des Triebstranges 2 gebildet ist.

Zur Messung der Position der Verbrennungskraftmaschine 3 ist in entsprechender Motorpositionssensor 16 vorgesehen, zur Messung des Saugrohrdrucks ein Saugrohrdrucksensor 17, zur Messung der (Betriebs-)Temperatur der Verbrennungskraftmaschine 3 ein Temperatursensor 18 und zur Messung des Umgebungsluftdrucks ist ein Umgebungsdrucksensor 19 vorgesehen, wobei alle Sensoren, 16-19 mit der Steuerung 15 verbunden sind.

Die Steuerung 15 ist hier zwar als einzelne Steuerung dargestellt, dies ist allerdings rein schematisch zu verstehen. Gleiches gilt für die Verbindungen zu den mit der Steuerung verbundenen Komponenten 6, 12, 13, 13a, 14, 16, 17, 18 und 19, die hier rein schematisch dargestellt sind. Die tatsächliche Realisierung der Verbindungen und der Steuerung 15 ist nicht auf das vorliegende Ausführungsbeispiel begrenzt, sondern umfasst alle im Kraftfahrzeugbereich üblichen Ausgestaltungen.

Optional ist neben der als Drosselklappe ausgebildeten Drosseleinrichtung 12 eine über die Steuerung 15 ansteuerbare Absperreinrichtung 12a vorgesehen, die das Saugrohr bzw. den Saugrohrbereich zwischen den Zylindern 3a und 3c und der Drosseleinrichtung 12 verschließen kann. Da Drosselklappen eine gewisse Undichtigkeit aufweisen und einen Druck bzw. einen Unterdruck nur für eine begrenzte Zeit halten können, dient die optionale Absperreinrichtung 12a dazu, einen im Saugrohrbereich 11 aufgebauten Unterdruck für einen längeren Zeitpunkt zu halten. Damit kann beispielsweise der Standbyzustand MZ_{Sb} verlängert werden, in dem ein verringerter Saugrohrdruck anliegt. Gleichzeitig wird die Druckbelastung der eigentlichen Drosseleinrichtung oder Drosselklappe 12 verringert und deren Lebensdauer gegebenenfalls erhöht.

Es ist auch möglich, mit der Drosseleinrichtung 12 und der optionalen Absperreinrichtung 12a einen Segelbetrieb des Verbrennungsmotors 3 zu reduzieren, bei dem der leer mitlaufende Motor mitgeschleppt wird. Durch den Unterdruck im Saugrohr 11 ist bei diesem Segelzustand der Widerstand durch die geringe oder fehlende Verdichtung in den Zylindern sehr stark reduziert.

Fig. 4 zeigt in einer anderen Darstellung den Drehzahlverlauf n und den Saugrohrdruckverlauf p_{SR} über die Zeit während eines Anhalte- und eines Startvorgangs. Der Drehzahlverlauf n ist dabei durch einen tatsächlichen Drehzahlverlauf mit allen Schwingungen nₜ und einem gemittelten Drehzahlverlauf nₘ dargestellt, während der Saugrohrdruckverlauf p_{SR} durch die strichpunktierte Linie dargestellt ist. Im Betrieb ist die Drosseleinrichtung und gegebenenfalls die optionale Absperreinrichtung 12a geöffnet und der Saugrohrdruck p_{SR} liegt auf dem Niveau des Umgebungsdrucks. Beim Schließen der Drosseleinrichtung 12 und/oder der Absperreinrichtung 12a (der das Abstellen des Verbrennungsmotors 3 bewirkt) sinkt nun der Saugrohrdruck p_{SR} auf ein Minimum p_{SRmin} ab. Gleichzeitig sinkt die Drehzahl während dieses Abstellvorgangs MZ_{Ab} auf null ab und der Motor 3 geht in seinen Standbymodus MZ_{Sb} über. Drosseleinrichtung 12 und Absperreinrichtung 12a bleiben verschlossen und der Saugrohrdruck p_{SR} verbleibt im Wesentlichen auf seinem Minimum. Er steigt jedoch durch Undichtigkeiten leicht an. Der Anstieg kann durch die Dichtigkeit der Drosseleinrichtung/Drosselklappe 12 und der Absperreinrichtung 12a verringert bzw. ganz auf null gestellt werden. Anschließend wird der Verbrennungsmotor 3 während des Startvorgangs -MZ_{St} über den Starter 13 (RSG) wieder in Gang gesetzt. Dabei steigt im Zeitraum Δt die Drehzahl nₘ an und während des Anstiegs treten relativ begrenzte maximale Drehzahlschwankungen nₘ von Δnₘₐₓ auf. Die Drosseleinrichtung 12 und die Absperreinrichtung 12a werden geöffnet und der Motor geht in seinen Antriebszustand MZ_{B} über.

Fig. 5 zeigt die Darstellung in Fig. 4, die um den Drehzahlverlauf n_{U} beim gleichen Start-Stopp-Zyklus überlagert ist, bei dem kein Unterdruck im Saugrohr 11 durch Schließen der Drosseleinrichtung 12 bzw. der Absperreinrichtung 12a erfolgt.

Dabei wird Folgendes deutlich: Zum einen ist der Abstellvorgang deutlich verlängert, d. h. der Verbrennungsmotor 3 braucht einen längere Zeit, bis die Drehzahl auf null abgesenkt ist. Ähnliches gilt für den Startvorgang, bei dem die Kurve n_{U} wesentlich flacher ansteigt und damit der Zeitraum Δt_{U} bis zum Erreichen eines stabilen Betriebszustands wesentlich verlängert ist gegenüber dem Zeitraum Δt bei einem Startvorgang mit einem im Saugrohr anliegenden Unterdruck. Auch die Drehzahlschwankungen weichen erheblich voneinander ab. Beim Startvorgang mit anliegendem Unterdruck ist die maximale Drehzahlschwankung Δnₘₐₓ wesentlich kleiner als die maximale Drehzahlschwankung Δn_{maxU} beim Startvorgang mit geöffneter Drosselklappe, also mit anliegendem Umgebungsdruck. Dieses Diagramm zeigt eindrucksvoll die Vorteile und Wirkung der vorliegenden Erfindung.

Weitere Variationen und Einzelheiten ergeben sich für den Fachmann im Rahmen der Ansprüche.

### Bezugszeichenliste

- A: Motordrehzahlverlauf
- B: Motormomentverlauf
- C: Verlauf der Stellung der Drosseleinrichtung
- M: Motormoment
- n: Motordrehzahl
- α: Position der Drosseleinrichtung
- 1: Kraftfahrzeug
- 2: Triebstrang
- 3: Verbrennungsmotor
- 3a-c: Zylinder
- 4: Zweimassenschwunggrad
- 5: Kupplung
- 6: Getriebe
- 7: Kurbelwelle
- 8: Getriebewelle
- 9: Antriebswelle
- 10a,b: Antriebsräder
- 11: Saugrohr
- 12: Drosseleinrichtung
- 12a: Absperreinrichtung
- 13: Starter
- 13a: Decoupler
- 14: Kraftstoffeinspritzung
- 15: Steuerung
- 16: Motorpositionssensor
- 17: Saugrohrdrucksensor
- 18: Motortemperatursensor
- 19: Umgebungsdrucksensor
- 20: Sensor zum Ermitteln der Position der Drosseleinrichtung
- 21: Start-Stopp-Verfahren
- 22: Abstellen des Verbrennungsmotors
- 23: Schließen einer Drosseleinrichtung
- 24: Aufbauen eines Unterdrucks in einem Saugrohr
- 25: Aufrechterhalten des Unterdrucks in dem Saugrohr
- 26: Starten des Verbrennungsmotors bei geschlossener Drosseleinrichtung
- 27: Betreiben des Verbrennungsmotors bei wenigstens teilweise geöffneter Drosseleinrichtung
- MZ_{B}: Antriebszustand
- MZ_{Ab}: Abstellvorgang
- MZ_{Sb}: Standbyzustand
- MZ_{St}: Startvorgang
- n₀: Leerlaufdrehzahl
- p_{SR}: Saugrohrdruck
- nₜ: tatsächliche Drehzahl
- nₘ: gemittelte Drehzahl
- Δnₘₐₓ: maximale Drehzahlschwankungen
- n_{U}: Drehzahlverlauf
- Δt_{U}: Startzeit ohne Unterdruck
- Δn_{maxU}: max. Drehzahlschwankung ohne Unterdruck

## Patentansprüche

1. Start-Stopp-Verfahren (21) für einen Verbrennungsmotor (3) eines Kraftfahrzeugs (1), wobei das Verfahren umfasst:
Abstellen des Verbrennungsmotors (3);
Schließen einer Drosseleinrichtung (12);
Halten eines beim Abstellen anliegenden Unterdrucks in einem Saugrohrabschnitt (11) zwischen der Drosseleinrichtung (12) und einem Zylinder (3a-c), wobei der Unterdruck im Saugrohr (11) durch einen Nachlaufbetrieb des Verbrennungsmotors (3) beim Abstellvorgang (MZ_{Ab}) aufgebaut wird;
Starten des Verbrennungsmotors (3), wobei der Unterdruck bei einem Startvorgang (MZ_{St}) im Anschluss an einen Standbyzustand (MZ_{Sb}) des Verbrennungsmotors (3) mittels der geschlossenen Drosseleinrichtung (12) aufrechterhalten wird;
Betreiben des Verbrennungsmotors (3) bei wenigstens teilweise geöffneter Drosseleinrichtung (12).

2. Verfahren nach Anspruch 1, wobei das Schließen der Drosseleinrichtung (12) zu Beginn eines Abstellvorgangs (MZ_{Ab}) erfolgt.

3. Verfahren nach einem der vorhergehenden Ansprüche, wobei der Unterdruck in dem Saugrohr (11) während des Motorstillstands in einem Standbyzustand (MZ_{Sb}), mittels einer geschlossenen Drosseleinrichtung (12) aufrechterhalten wird.

4. Verfahren nach einem der vorhergehenden Ansprüche, wobei die Drosseleinrichtung (12) bei laufendem Verbrennungsmotors (3) in einem Antriebszustand (MZ_{B}) in Abhängigkeit von einen Fahrerwunsch (FW) wenigstens teilweise geöffnet ist.

5. Verfahren nach einem der vorhergehenden Ansprüche, wobei das Starten des Verbrennungsmotors (3) bei geschlossener Drosseleinrichtung (12) bei einem Unterdruck erfolgt der unter einem Druckschwellenwert liegt, der zwischen 0,2 bis 0,8 bar unter einem Umgebungsdruck liegt.

6. Steuerung (15) zum Betreiben eines Verbrennungsmotors (3) eines Kraftfahrzeugs (1) in einem Start-Stopp Zyklus, die dazu ausgebildet ist, ein Verfahren nach einem der Ansprüche 1 bis 5 auszuführen.

7. Verbrennungsmotor (3) mit einer Steuerung (15) nach Anspruch 6, der dazu eingerichtet ist das Verfahren nach einem der Ansprüche 1 bis 5 durchzuführen.

8. Kraftfahrzeug (1), umfassend:
einen Triebstrang (2) mit einem Verbrennungsmotor (3) und einem Starter (13) zum Drehen des Verbrennungsmotors (3) für eine vorgegebene Anzahl von Umdrehungen; und einer Steuerung (15) nach Anspruch 6.

9. Kraftfahrzeug nach Anspruch 8, weiter einen Sensor (20) zum Ermitteln einer Stellung der Drosseleinrichtung des Verbrennungsmotors (3) aufweisend.

10. Kraftfahrzeug nach einem der Ansprüche 8 bis 9, weiter einen Saugrohrdrucksensor (17) zur Erfassung eines Saugrohrdrucks (p_{SR}) aufweisend, der zwischen der Drosseleinrichtung (12) und einem Zylinder (3a-c) anliegt.

11. Kraftfahrzeug nach einem der Ansprüche 8 bis 10, wobei der Starter (13) als Riemenstartergenerator ausgebildet ist.

12. Kraftfahrzeug (1) nach einem der Ansprüche 8 bis 11, wobei der Verbrennungsmotor (3) ein Dieselmotor ist.

## Claims

1. Start-stop method (21) for an internal combustion engine (3) of a motor vehicle (1), wherein the method comprises:
shutting down the internal combustion engine (3);
closing a throttle device (12);
maintaining a negative pressure applied during shutdown in an intake pipe portion (11) between the throttle device (12) and a cylinder (3a-c), wherein the negative pressure in the intake pipe (11) is built up by a wake-up operation of the internal combustion engine (3) during the shutdown process (MZ_{Ab});
starting the internal combustion engine (3), wherein the negative pressure during a starting process (MZst) following a standby state (MZ_{Sb}) of the internal combustion engine (3) is maintained by means of the closed throttle device (12);
operating the internal combustion engine (3) when the throttle device (12) is at least partially open.

2. Method according to claim 1, wherein the throttle device (12) is closed at the beginning of a shutdown process (MZ_{Ab}).

3. Method according to any of the preceding claims, wherein the negative pressure in the intake pipe (11) during the engine standstill in a standby state (MZ_{Sb}) is maintained by means of a closed throttle device (12).

4. Method according to any of the preceding claims, wherein the throttle device (12) is at least partially opened when the internal combustion engine (3) is running in a drive state (MZ_{B}) depending on a driver's request (FW).

5. Method according to any of the preceding claims, wherein the internal combustion engine (3) is started with a closed throttle device (12) at a negative pressure which is below a pressure threshold value which is between 0.2 and 0.8 bar below an ambient pressure.

6. Controller (15) for operating an internal combustion engine (3) of a motor vehicle (1) in a start-stop cycle, which controller is designed to carry out a method according to any of claims 1 to 5.

7. Internal combustion engine (3) having a controller (15) according to claim 6, which internal combustion engine is configured to carry out the method according to any of claims 1 to 5.

8. Motor vehicle (1) comprising:
a drive train (2) having an internal combustion engine (3) and a starter (13) for rotating the internal combustion engine (3) for a predetermined number of turns and a controller (15) according to claim 6.

9. Motor vehicle according to claim 8, further comprising a sensor (20) for determining a position of the throttle device of the internal combustion engine (3).

10. Motor vehicle according to either claim 8 or claim 9, further comprising an intake pipe pressure sensor (17) for detecting an intake pipe pressure (p_{SR}) which is between the throttle device (12) and a cylinder (3a-c).

11. Motor vehicle according to any of claims 8 to 10, wherein the starter (13) is designed as a belted alternator starter.

12. Motor vehicle (1) according to any of claims 8 to 11, wherein the internal combustion engine (3) is a diesel engine.

## Revendications

1. Procédé de démarrage-d'arrêt (21) pour un moteur à combustion interne (3) d'un véhicule automobile (1), dans lequel le procédé comprend :
l'arrêt du moteur à combustion interne (3) ;
la fermeture d'un dispositif d'étranglement (12) ;
le maintien d'une dépression appliquée lors de l'arrêt dans une section de tuyau d'admission (11) entre le dispositif d'étranglement (12) et un cylindre (3a-c), dans lequel la dépression dans le tuyau d'admission (11) est créée par un fonctionnement par inertie du moteur à combustion interne (3) lors du processus d'arrêt (MZ_{Ab}) ;
le démarrage du moteur à combustion interne (3), dans lequel la dépression est maintenue lors d'un processus de démarrage (MZst) à la suite d'un état de veille (MZ_{Sb}) du moteur à combustion interne (3) au moyen du dispositif d'étranglement (12) fermé ;
le fonctionnement du moteur à combustion interne (3) lorsque le dispositif d'étranglement (12) est au moins partiellement ouvert.

2. Procédé selon la revendication 1, dans lequel la fermeture du dispositif d'étranglement (12) est effectuée au début d'un processus d'arrêt (MZ_{Ab}).

3. Procédé selon l'une des revendications précédentes, dans lequel la dépression dans le tuyau d'admission (11) est maintenue pendant l'arrêt du moteur dans un état de veille (MZ_{Sb}), au moyen d'un dispositif d'étranglement (12) fermé.

4. Procédé selon l'une des revendications précédentes, dans lequel le dispositif d'étranglement (12) est au moins partiellement ouvert lorsque le moteur à combustion interne (3) est en marche dans un état d'entraînement (MZ_{B}) en fonction d'une demande de conducteur (FW).

5. Procédé selon l'une des revendications précédentes, dans lequel le démarrage du moteur à combustion interne (3) est effectué lorsque le dispositif d'étranglement (12) est fermé à une dépression qui se trouve en dessus d'une valeur seuil de pression se trouvant entre 0,2 à 0,8 bar en dessous d'une pression ambiante.

6. Appareil de commande (15) permettant de faire fonctionner un moteur à combustion interne (3) d'un véhicule automobile (1) dans un cycle de démarrage-d'arrêt, lequel appareil est configuré pour exécuter un procédé selon l'une des revendications 1 à 5.

7. Moteur à combustion interne (3) comportant un appareil de commande (15) selon la revendication 6, lequel est configuré pour exécuter le procédé selon l'une des revendications 1 à 5.

8. Véhicule automobile (1), comprenant :
une chaîne cinématique (2) comportant un moteur à combustion interne (3) et un démarreur (13) permettant de faire tourner le moteur à combustion interne (3) pendant un nombre prédéfini de tours ; et un appareil de commande (15) selon la revendication 6.

9. Véhicule automobile selon la revendication 8, présentant en outre un capteur (20) permettant de déterminer une position du dispositif d'étranglement du moteur à combustion interne (3).

10. Véhicule automobile selon l'une des revendications 8 à 9, présentant en outre un capteur de pression de tuyau d'admission (17) permettant de détecter une pression de tuyau d'admission (p_{SR}) qui est appliquée entre le dispositif d'étranglement (12) et un cylindre (3a-c).

11. Véhicule automobile selon l'une des revendications 8 à 10, dans lequel le démarreur (13) est conçu sous la forme d'un générateur-démarreur à courroie.

12. Véhicule automobile (1) selon l'une des revendications 8 à 11, dans lequel le moteur à combustion interne (3) est un moteur diesel.
